# EUROPÄISCHE PATENTSCHRIFT

(11) **EP 1 524 930 B1**
(45) Veröffentlichungstag und Bekanntmachung des Hinweises auf die Patenterteilung: **23.08.2006**
(21) Anmeldenummer: 03787726.3
(22) Anmeldetag: 24.07.2003
(51) Int. Cl.: A47F 10/04, G07F 7/06

(54) **EINRICHTUNG ZUM AUSLEIHEN VON TRANSPORTWAGEN**
SYSTEM FOR THE PROVISION OF TROLLEYS
SYSTEME DE PRET DE CHARIOTS

(30) Priorität: 03.08.2002 DE 10235727
(43) Veröffentlichungstag der Anmeldung: 27.04.2005
(73) Patentinhaber: WANZL METALLWARENFABRIK GMBH, D-89336 Leipheim (DE)
(72) Erfinder: DEYERLER, Kurt, 89257 Illertissen (DE); HÄMMERLE, Jürgen, 89312 Günzburg (DE)
(86) Internationale Anmeldenummer: PCT/DE2003/002479
(87) Internationale Veröffentlichungsnummer: WO 2004/016138

(56) Entgegenhaltungen:
- DE-A- 4 200 861
- DE-A- 19 719 460
- US-A- 5 328 013
- US-B1- 6 206 165

## Beschreibung

Die Erfindung betrifft eine Einrichtung zum Ausleihen von Transportwagen, die jeweils ein mit einer Sperreinrichtung ausgestattetes Pfandschloss aufweisen, mit einer Sammelstelle, in der die Transportwagen auf Pfandbasis in mindestens einer Reihe aneinandergekoppelt abstellbar und durch Entrichtung eines Pfandes dieser wenigstens einen Reihe wieder entnehmbar sind, sowie mit einer Vorrichtung, die im Bereich der Sammelstelle auf die Sperreinrichtung eines jeden Pfandschlosses derart einwirkt, dass nur innerhalb der Sammelstelle das An- und Abkoppeln der Transportwagen möglich ist.

Die DE 43 00 852 A1 beschreibt eine Einrichtung dieser Art. Die Vorrichtung dieser Einrichtung wird durch einen eisenmetallischen Führungsholm gebildet, auf welchen die mit einem Magnet ausgestatteten Sperreinrichtungen der Pfandschlösser reagieren. Nur im Bereich des Führungsholmes und ganz nahe an diesem platziert, lassen sich die Pfandschlösser der Transportwagen bedienen. Obwohl diese Einrichtung relativ einfach und robust aufgebaut ist, besitzt sie dennoch Nachteile. Einer dieser Nachteile besteht darin, dass man mit den Transportwagen ganz nahe an den Führungsholm heranfahren muß, um die magnetisch wirkende Sperreinrichtung entsprechend beeinflussen zu können.
Ein weiterer Nachteil zeigt sich dadurch, dass man außerhalb der Einrichtung in unerwünschter Weise Transportwagen aneinanderkoppeln kann, wenn man an das Pfandschloss der Wagen einen eisenmetallischen Gegenstand seitlich heranführt, so dass die Sperreinrichtung zum Auslenken oder Entsperren veranlasst wird.
Schließlich besteht ein weiterer Nachteil darin, dass in einem SB-Markt, in dem mehrere Einrichtungen dieser Art im Einsatz sind, Personen nach erfolgtem Einkauf bevorzugt jene Einrichtungen aufsuchen, die sich ganz nahe am eigenen Auto befinden, um die ausgeliehenen Transportwagen an eben dieser nächstgelegenen Einrichtung abzustellen, obwohl zuvor die Transportwagen einer weiter entfernten Einrichtung entnommen worden sind. In solchen Fällen kann es vorkommen, dass man den ausgeliehenen Transportwagen nicht mehr an der am nächsten gelegenen Einrichtung abgeben kann, weil diese bereits belegt ist.

Es ist Aufgabe der Erfindung, eine Einrichtung der hier vorliegenden Art so weiterzuentwickeln, dass sich die eben beschriebenen Nachteile vermeiden lassen.

Die Lösung der Aufgabe besteht darin, dass die Vorrichtung wenigstens einen Sender aufweist und die Sperreinrichtung eines jeden Pfandschlosses mit elektrisch wirkenden Steuermitteln ausgestattet ist, die von der Vorrichtung ansteuerbar sind.

Der Sender der Vorrichtung bedient sich bevorzugt der Funk- und Mikrowellentechnik. Auch Ultraschall- oder Infrarottechnik ist geeignet. Durch den Sender lässt sich der gesamte Raum der Einrichtung erfassen und damit unsichtbar die Sperreinrichtung eines jeden Pfandschlosses erreichen, ganz gleich, wie genau oder ungenau die Transportwagen in einer Reihe abgestellt sind. Im Gegensatz zum eingangs erwähnten Führungsholm ist eine bewusst vorzunehmende Positionierung der Transportwagen, um die Sperreinrichtung beeinflussen zu können, nicht erforderlich. Durch das Verwenden des Senders und der pro Pfandschloss vorgesehenen Steuermittel ist es auch nicht mehr möglich, außerhalb der Einrichtung Transportwagen gegenseitig an- und abzukoppeln, da der Sender nur innerhalb der Einrichtung wirksam ist. Schließlich lassen sich durch Verwendung elektronischer, also "intelligenter" Steuermittel diese so programmieren oder kennzeichnen, dass nur mit gleicher Kennung ausgetattete Transportwagen innerhalb einer zuvor festgelegten Einrichtung in wenigstens einer vorbestimmten Reihe und in einer vorbestimmten Anzahl abgestellt werden können. Dies bedeutet, dass ein Transportwagen immer nur an jener Einrichtung abgestellt werden kann, aus der er auch zuvor entnommen worden ist.

Die Erfindung wird anhand einer Prinzipskizze näher erläutert.

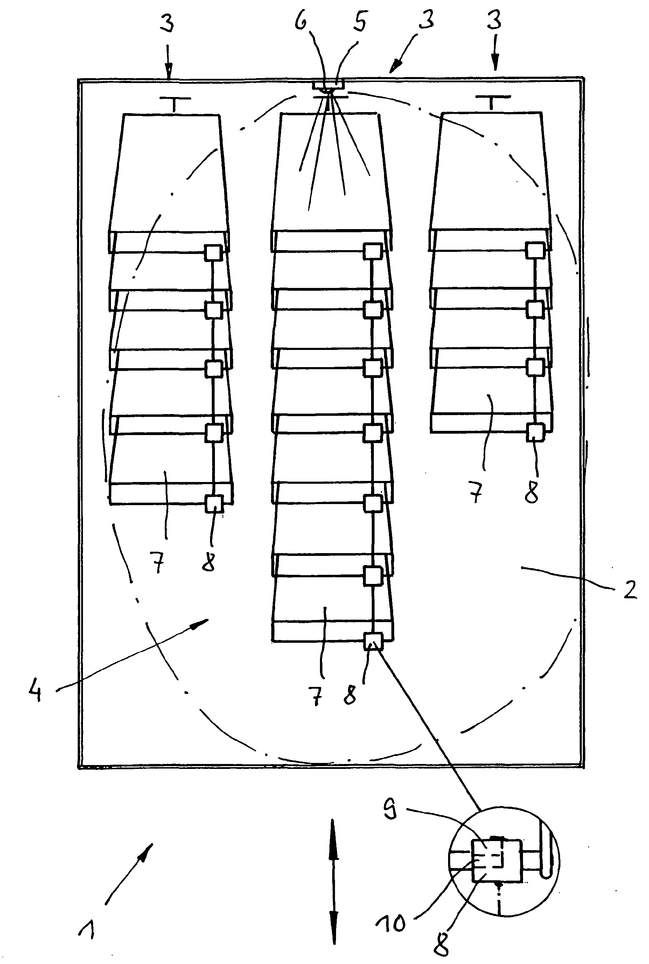

Die Zeichnung zeigt in einer Draufsicht eine Einrichtung 1 mit einer Sammelstelle 2, etwa einer sogenannten "Parkbox", durch die ein Raum zur Aufnahme von beispielsweise als Einkaufswagen gestalteten Transportwagen 7 geschaffen ist. Jeder Transportwagen 7 ist in bekannter Weise so gestaltet, dass er sich mit gleichen Transportwagen 7 in einer Reihe 3 platzsparend, und ineinandergeschoben, abstellen lässt. Ebenso ist jeder Transportwagen 7 mit einem bekannten Pfandschloss 8 ausgestattet, das ein Kopplungsteil und eine Pfandaufnahme aufweist, so dass sich die Transportwagen 7 unter Entrichtung eines Pfandes vom nächsten Transportwagen 7 abkoppeln und nach Gebrauch wieder ankoppeln lassen, wobei dann das zuvor entrichtete Pfand wieder zurückerstattet wird. Jedes Pfandschloss 8 ist mit einer Sperreinrichtung 9 ausgestattet, deren Funktionsweise anschließend erklärt wird. Im Bereich der Sammelstelle 2 ist eine Vorrichtung 5 angeordnet, die auf die Sperreinrichtung 9 eines jeden Pfandschlosses derart einwirkt, dass nur innerhalb der Sammelstelle 2 ein An- und Abkoppeln der Transportwagen 7 auf Pfandbasis möglich ist. Um dies zu erreichen, ist die Vorrichtung 5 mit einem Sender 6 ausgestattet, der eine vorbestimmte Fläche 4, strichpunktiert angedeutet, innerhalb der Sammelstelle 2 erfasst oder bestrahlt, wobei als "Strahlung" Funk, Mikrowelle, Ultraschall oder Infrarotlicht geeignet sind. Der Sender 6 erfasst im Beispiel drei Reihen 3 von Transportwagen 7. Die Sperreinrichtung 9 eines jeden Pfandschlosses 8 umfasst eine Energiequelle, beispielsweise eine Batterie und Steuermittel 10 in Form einer Steuerelektronik, einer Empfangseinrichtung für die Steuerelektronik und einer Sperreinheit, die imstande ist, die Funktion des Pfandschlosses 8 zu beeinflussen. Die elektrisch wirkenden Steuermittel 10 und die Sperreinheit stehen in Wirkverbindung. Jedes Pfandschloss 8 besitzt in bekannter Weise einen Schacht zur Aufnahme des Kopplungsteiles des Pfandschlosses 8 eines weiteren Transportwagens 7. Die Sperreinheit ist am Schacht angeordnet und ragt beispielsweise mit einem beweglichen, ansteuerbaren Vorsprung dann in den Schacht, wenn sich ein Transportwagen 7 außerhalb der Einrichtung 1 und damit außerhalb des vom Sender 6 erfassten Bereiches 4 befindet. In dieser Lage kann das Kopplungsteil des Pfandschlosses 8 eines weiteren Transportwagens 7 nicht in den Schacht des Pfandschlosses 8 eines außerhalb des Bereiches 4 befindlichen Transportwagens 7 eingeführt werden, so dass auch kein An- oder Abkopplungsvorgang möglich ist. Auf alle in der Einrichtung 1 befindlichen Transportwagen 7 wirkt der Sender 6 auf die Steuermittel 10 der Pfandschlösser 8 derart ein, dass die Sperreinheit eines jeden Pfandschlosses 8 vom Schacht dieser Pfandschlösser gelöst oder herausgeführt ist, so dass sich die dort befindlichen Transportwagen 7 ankoppeln oder Transportwagen 7 zur Einrichtung 1 zurückbringen und dort in Reihen 3 abgestellt ebenfalls ankoppeln lassen. Alternativ kann die Sperreinheit auch in die Münzaufnahme des Pfandschlosses 8 ragen, so dass kein Pfand eingeführt oder ausgelöst werden kann. Auch in diesem Falle ist außerhalb des Bereiches 4 kein An- oder Abkoppelungsvorgang möglich. Die Steuermittel 10 sind so programmierbar, dass pro Sammelstelle 2 nur Transportwagen 7 abstellbar sind, die gleich programmiert sind, also die gleiche Kennung besitzen. Entsprechend muß der Sender 6 einer jeden Sammelstelle 2 angepasst sein, beispielsweise durch Veränderung seiner Frequenz. Der Sender 6 für eine erste Sammelstelle 2 strahlt somit in einer anderen Frequenz als der Sender 6 einer weiteren Sammelstelle 2.

Es bleibt anzumerken, dass pro Einrichtung 1 mehr als nur eine Vorrichtung 5, also mindestens zwei Sender 6 vorgesehen sein können.
Es bleibt ferner dem Fachmann überlassen, wie er die Steuerelektronik, die Empfangseinrichtung zum Empfang der vom Sender 6 ausgesandten Strahlen und die Sperreinheit gestaltet. Angesichts der Verschiedenartigkeit bekannter Pfandschlösser 8 verbleiben hier unterschiedliche Gestaltungsmöglichkeiten.

## Patentansprüche

1. Einrichtung (1) zum Ausleihen von Transportwagen (7), die jeweils ein mit einer Sperreinrichtung (9) ausgestattetes Pfandschloss (8) aufweisen, mit einer Sammelstelle (2), in der die Transportwagen (7) auf Pfandbasis in mindestens einer Reihe (3) aneinandergekoppelt abstellbar und durch Entrichtung eines Pfandes dieser wenigstens einen Reihe (3) wieder entnehmbar sind, sowie mit einer Vorrichtung (5), die im Bereich der Sammelstelle (2) auf die Sperreinrichtung (9) eines jeden Pfandschlosses (8) derart einwirkt, dass nur innerhalb der Sammelstelle (2) das An- und Abkoppeln der Transportwagen (7) möglich ist, **dadurch gekennzeichnet, dass** die Vorrichtung (5) wenigstens einen Sender (6) aufweist und die Sperreinrichtung (9) eines jeden Pfandschlosses (8) mit elektrisch wirkenden Steuermitteln (10) ausgestattet ist, die von der Vorrichtung (5) ansteuerbar sind.

2. Einrichtung nach Anspruch 1, **dadurch gekennzeichnet, dass** die Steuermittel (10) so programmierbar sind, dass pro Sammelstelle (2) nur solche Transportwagen (7) abstellbar sind, die die gleiche Kennung aufweisen.

## Claims

1. A system (1) for the provision of trolleys (7) which each have a deposit-operated lock (8) provided with a blocking mechanism (9), comprising a collection point (2) in which the trolleys (7) may be parked so as to be coupled together in at least one row (3) on a deposit basis and are removable from this at least one row (3) on payment of a deposit, and comprising a device (5) which, in the region of the collection point (2), acts on the blocking mechanism (9) of each deposit-operated lock (8) in such a way that coupling and uncoupling of the trolleys (7) is only possible within the collection point (2), **characterised in that** the device (5) has at least one transmitter (6), and the blocking mechanism (9) of each deposit-operated lock (8) is provided with electrically acting control means (10) which are actuatable by the device (5).

2. A system according to claim 1, **characterised in that** the control means (10) are programmable so that, for each collection point (2), only those trolleys (7) which have the same identification may be parked.

## Revendications

1. Système (1) de prêt de chariots de transport (7) respectivement munis d'une serrure (8) à jetons de consigne équipée d'un système de blocage (9), comprenant une zone de rassemblement (2) dans laquelle les chariots de transport (7) peuvent être remisés en étant accouplés les uns aux autres en au moins un rang (3), sur la base d'une consigne, et peuvent être de nouveau prélevés de ce rang (3) prévu au minimum, par capture d'un jeton de consigne ; ainsi qu'un dispositif (5) agissant sur le système de blocage (9) de chaque serrure (8) à jetons de consigne, dans la région de la zone de rassemblement (2), de façon telle que l'accouplement et la dissociation des chariots de transport (7) soient possibles uniquement à l'intérieur de ladite zone de rassemblement (2), **caractérise par le fait que** le dispositif (5) présente au moins un émetteur (6), et le système de blocage (9) de chaque serrure (8) à jetons de consigne est pourvu de moyens de commande (10) agissant électriquement et pouvant être activés par ledit dispositif (5).

2. Système selon la revendication 1, **caractérisé par le fait que** les moyens de commande (10) sont programmables de façon telle que, pour chaque zone de rassemblement (2), seuls puissent être remisés des chariots de transport (7) qui possèdent la même identification.
